# EUROPÄISCHE PATENTSCHRIFT

(11) **EP 1 000 803 B1**
(45) Veröffentlichungstag und Bekanntmachung des Hinweises auf die Patenterteilung: **20.08.2003**
(21) Anmeldenummer: 00101238.4
(22) Anmeldetag: 21.05.1996
(51) Int. Cl.: B60P 1/44

(54) **Ladebordwandsystem**
Loading tail gate system
Système de hayon élévateur

(43) Veröffentlichungstag der Anmeldung: 17.05.2000
(62) Teilanmeldung aus: 96108052.0
(73) Patentinhaber: Sörensen Hydraulik Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole, Dipl.-Phys.

(56) Entgegenhaltungen:
- DE-A- 2 654 286
- DE-A- 3 228 765
- "Super Mover 1500", Produktions AB Hydro Lift Torshälla, Schweden

## Beschreibung

Die Erfindung betrifft ein Ladebordwandsystem zur Befestigung an Fahrzeugen, insbesondere Lastkraftfahrzeugen, umfassend jeweils ein im wesentlichen parallelogrammförmiges, aus zwei im wesentlichen parallel voneinander beabstandeten Tragwerken bestehendes Hubund Klapptragwerk, eine im wesentlichen plattenförmige Ladebordwand zum Heben und Absenken einer Last und zum Verschließen eines Stauraumes des Fahrzeuges und eine Hubzylindereinrichtung zum Heben und Senken der Ladebordwand sowie eine Klappzylindereinrichtung zum Verschwenken der Ladebordwand von der Horizontalen in die Vertikale und umgekehrt.

Ladebordwandsysteme dieser Art sind seit langem bekannt ("Super Mover 1500", Produktions AB Hydro Lift Torshälla, Schweden) und finden insbesondere Anwendung bei Lastkraftfahrzeugen, um mit dem Lastkraftfahrzeug zu transportierende Lasten am Einsatzort von der Ladeplattform des Lastkraftfahrzeuges auf die Fahrbahn, auf dem das Lastkraftfahrzeug steht, absenken zu können, so daß die Last dann anderweitig zum Bestimmungsort verbracht werden kann. Das gleiche gilt für den Beladungsvorgang eines Kraftfahrzeugs, d.h. die Last wird auf die sich auf der Fahrbahnebene befindende Ladebordwand aufgebracht, die Ladebordwand wird auf die Höhe der Ladeplattform des Lastkraftfahrzeuges angehoben und nachfolgend auf die Ladeplattform verbracht. Ist der Entlade- bzw. Beladevorgang beendet, wird die Ladebordwand aus der Horizontalen, in der sie sich zum Be- und Entladen befand, in die Vertikale verschwenkt, so daß die Ladebordwand als rückwärtiger Abschluß der Ladefläche bzw. eines kofferartig ausgestalteten Laderaumes dienen kann.

Für das Heben und Senken der Ladebordwand in im wesentlichen horizontaler Ausrichtung für den Be- und Entladevorgang von der Ebene der Ladefläche eines Lastkraftfahrzeuges auf den Straßenuntergrund und vom Straßenuntergrund auf die Ebene der Ladefläche wird eine sogenannte Hubzylindereinrichtung verwendet, die hydraulisch oder anderweitig betrieben wird. Für das Verschwenken der Ladebordwand für das Öffnen und Schließen des eigentlichen Laderaumes aus der Horizontalen in die Vertikale und umgekehrt wird eine hydraulisch oder anderweitig betriebene Klappzylindereinrichtung verwendet. Ladebordwandsysteme der vorbeschriebenen bekannten Art weisen somit zwei Zylindereinrichtungen auf, wobei regelmäßig die Hubzylindereinrichtung mit einem Tragwerk des parallelogrammförmigen Hub- und Klapptragwerks zusammenwirkt, wohingegen die Klappzylindereinrichtung mit dem anderen Tragwerk des Hub- und Klapptragwerkes zusammenwirkt.

Bei im Stand der Technik bekannten Ladebordwandsystemen der vorbeschriebenen Art treten bei Be- und Entladevorgang, d.h. also unter Einwirkung einer Kraft, die in Abhängigkeit des zu hebenden bzw. zu senkenden Transportguts erhebliche Größen aufweisen kann, Probleme dadurch auf, daß infolge der auf der Ladebordwand sich dabei befindenden Last ein Verbiegen der Ladebordwand relativ zur Ladefläche des Lastkraftfahrzeuges auftreten kann, so daß Spalte zwischen der Ladebordwand und der Ebene der Ladefläche sowohl in horizontaler Richtung als auch in vertikaler Richtung entstehen, die, bezogen auf die Breite der Ladeflächenöffnung zudem noch erheblich variieren können. Die Folge ist, daß insbesondere bei schweren Lasten, die mit der Ladebordwand in vertikaler Richtung, d.h. beim Be- und Entladen, transportiert werden müssen, regelrechte Schwellen zwischen der Ebene der Ladebordwand und der Ladefläche des Lastkraftfahrzeugs entstehen, so daß die Last vielfach über diese Schwelle, sei es mit Sackkarren, per Hand oder mittels anderer Hilfseinrichtung, regelrecht gewuchtet werden muß.

Dieses bringt große Gefahren für die Sicherheit des Ladeguts mit sich, da durch die Verkantung bei der Überwindung der Schwelle zwischen Ladeplattform und Ladeebene des Lastkraftfahrzeugs eine Beschädigung erfolgen kann und, was wenigstens gleichbedeutend nachteilig ist, eine große Gefahrenquelle für die Person darstellt, die diese Transportarbeiten ausführen muß, weil eine Gefahr des Einklemmens von Extremitäten wie Füßen und Händen mit beträchtlichen Unfallfolgen befürchtet werden muß.

Der eigentliche Grund für das Auftreten der horizontalen und vertikalen Spalte, die zudem noch zur einen Seite der Breite der Ladefläche größer werden, hat konstruktionsbedingt seine Ursache darin, daß die Hubzylindereinrichtung und die Klappzylindereinrichtung seitlich zu den beiden das Hub- und Klapptragwerk bildenden einzelnen Tragwerken versetzt, d.h. quer zur Öffnung der Ladefläche bzw. quer zur Ladebordwand, angeordnet sind, so daß aufgrund dieser Konstruktion unter Last beträchtliche Hebelkräfte auftreten können, die die vorbeschriebene Entstehung der horizontalen und vertikalen Spalte unter Last zur Folge haben.

Man hat dieses an sich gravierende Problem dadurch zu beheben versucht, daß man, ausgehend von einer mittleren zu erwartenden Belastung der Ladebordwand beim Heben und Senken einer Last, von vornherein die beiden das Hubund Klapptragwerk bildenden Tragwerke derart mit ihren einzelnen Elementen schräg versetzt einbaute, daß man bei der zu erwartenden mittleren Last, die mit der Ladebordwand anzuheben bzw. abzusenken ist, eine solche Verbiegung des Hub- und Klapptragwerks in Verbindung mit der Ladebordwand erreichte, daß unter diesen voraufgeschriebenen Bedingungen die Ladebordwand dann tatsächlich in einer Ebene mit der Ladeflächenebene verlief. Abgesehen davon, daß derartige konstruktive Kunstgriffe nur dann funktionieren, wenn genau die Belastung eingehalten wird, für die dieser konstruktionsbedingte Kunstgriff ausgelegt worden ist, hat die derartige bekannte technische Maßnahme den Nachteil, daß im unbelasteten Zustand die Ladebordwand in ihrer vertikalen Schwenkposition, d.h. zum Verschließen des Laderaums, diesen nicht richtig verschließt, was sich unter einem Winkel öffnende beidseitige Spalte zwischen vertikal verschwenkter Ladebordwand und der Beladeöffnung des Laderaumes des Lastkraftfahrzeugs zur Folge hat. Ein weiterer wesentlicher Nachteil besteht bei dieser bekannten Hilfskonstruktion darin, daß bei einer Belastung der Ladebordwand oberhalb der festgelegten Kraft und unterhalb wiederum die nachteiligen Spalte zwischen der Ladeebene des Kraftfahrzeuges und der Ebene der Ladebordwand auftreten, was wiederum die oben beschriebenen nachteiligen Folgen zeigt.

Es ist deshalb Aufgabe der vorliegenden Erfindung, ein Ladebordwandsystem der eingangs genannten Art zu schaffen, das die vorangehend beschriebenen Nachteile nicht aufweist, d.h. unabhängig von der auf der Ladebordwand beim Be- und Entladevorgang zu transportierenden Last keine Spalten vertikaler und horizontaler Richtung relativ zur Ladeebene eines Fahrzeugs zeigt, das im in die Vertikale verschwenkten Zustand der Ladebordwand keine Spalte zwischen der Ladebordwand und der Öffnung des Laderaums des Fahrzeugs zeigt, das einfach aufgebaut ist, einfach hergestellt werden kann und kostengünstig bereitstellbar ist, und das ein stabiles und sicheres Anheben und Absenken einer Last auf der Ladebordwand gewährleistet und ein sicheres Verschließen des Laderaumes eines Fahrzeuges gewährleistet.

Gelöst wird die Aufgabe gemäß der Erfindung dadurch, daß das erste Tragwerk einen ersten Tragarm und einen zweiten Tragarm umfaßt, der an seinem einen Ende mit dem ersten Tragarm verbunden ist, wobei das zweite Ende eine im wesentlichen orthogonal zum ersten Tragarm verlaufende Drehachse aufweist, über die der zweite Tragarm drehbar mit der Ladebordwand befestigt ist.

Die erfindungsgemäß vorgeschlagene vorteilhafte Lösung sichert auf einfache konstruktive Weise, daß die Bedingung auf einfache Weise eingehalten werden kann, daß die Drehpunkte der Elemente des ersten Tragwerks, in der auch die Hubzylindereinrichtung angeordnet ist, in einer Ebene liegen.

Es ist vorteilhaft, daß der erste Tragarm über eine erste Drehachse am Fahrzeug drehbar befestigt ist und über eine zweite, am entgegengesetzten Ende des ersten Tragarms angeordnete zweite Drehachse mit einem ersten Ende der Hubzylindereinrichtung befestigt ist und wobei das zweite Ende der Hubzylindereinrichtung über eine Drehachse drehbar am Fahrzeug befestigt ist. Zwar ist es grundsätzlich möglich, das erste Tragwerk anders als vorbeschrieben auszubilden, das vorbeschriebene hat jedoch den großen Vorteil, daß dabei auf konstruktiv einfache Weise die Bedingung erfüllt wird, daß die Drehpunkte der Elemente des ersten Tragwerks sowie der Hubzylindereinrichtung in einer Ebene liegen und somit durch diese vorteilhafte Ausgestaltung eine einfach zu realisierende, aber sehr stabile konstruktive Lösung gefunden worden ist.

Gemäß einer weiteren vorteilhaften Ausgestaltung des Ladebordwandsystems umfaßt das erste Tragwerk zwei im wesentlichen parallel voneinander beabstandete erste Tragarme.

Vorteilhaft ist es, daß der zweite Tragarm im wesentlichen in der Mittelebene zwischen den beiden ersten Tragarmen angeordnet ist, womit eine sehr einfache und kostengünstige Ausbildung und Integration des zweiten Tragarms in das erste Tragwerk erreichbar ist.

Bei einer noch anderen weiteren vorteilhaften Ausführungsform des Ladebordwandsystems umfaßt das zweite Tragwerk zwei im wesentlichen parallel voneinander beabstandete erste Tragarme, wobei die ersten Tragarme über eine erste Drehachse am Fahrzeug drehbar befestigt sind und über eine zweite, am anderen Ende der ersten Tragarme angeordnete zweite Drehachse, die im wesentlichen orthogonal zu den ersten Tragarmen und parallel zur ersten Drehachse verläuft, drehbar mit der Ladebordwand befestigt sind. Auch hier gilt, was schon vorangehend im Zusammenhang mit dem ersten Tragwerk ausgeführt worden ist, daß auf die vorbeschriebene Weise das zweite Tragwerk ebenfalls konstruktiv sehr einfach ausgebildet sein kann, um die Bedingung zu erfüllen, daß die Drehpunkte der Elemente des zweiten Tragwerks, in der auch die Klappzylindereinrichtung als Teil des Parallelogramms des zweiten Tragwerks angeordnet ist, in einer Drehebene liegen können, obwohl grundsätzlich auch andere Konstruktionen denkbar sind, die die voraufgeführte Grundbedingung der erfindungsgemäß vorgeschlagenen Lösung erfüllen können. Die hier aber vorteilhaft vorgeschlagene Lösung ist grundsätzlich bei einfacher konstruktiver Ausgestaltung sehr stabil und somit verhältnismäßig kostengünstig herstellbar.

Schließlich ist es vorteilhafterweise möglich, daß bei dem Ladebordwandsystem die Klappzylindereinrichtung, die an ihrem ersten Ende drehbar am Fahrzeug befestigt ist, mit ihrem zweiten Ende um eine Drehachse im wesentlichen orthogonal zur Längsachse der Klappzylindereinrichtung drehbar mit der Ladebordwand befestigt ist, wobei die Längsachse im wesentlichen in der die Schwenkebene bildenden Ebene des zweiten Tragwerks verläuft. Auch hier gilt wiederum, daß grundsätzlich auch bezüglich dieses Punktes das zweite Tragwerk konstruktiv sehr einfach zur Erfüllung der Bedingung, daß die Drehpunkte der Elemente des zweiten Tragwerks in einer Schwenkebene liegen, dessen Teil auch die Klappzylindereinrichtung ist, erfüllt ist, ausgebildet werden kann, obwohl grundsätzlich auch hier andere konstruktive Lösungen möglich sind, die die Grundbedingung erfüllen.

Die eigentliche konstruktive Ausgestaltung der Tragarme kann auf beliebige geeignete Weise gewählt werden, d.h. diese Tragarme können als Formteile beispielsweise aus Stahlguß oder dergleichen hergestellt werden, es hat sich jedoch als sehr vorteilhaft herausgestellt, die Tragarme im wesentlichen plattenförmig auszubilden, so daß diese aus plattenförmigen Halbzeugen, beispielsweise aus Stahlplatten oder sonstigen beliebigen anderen geeigneten plattenförmigen Werkstoffen, durch Ausschneiden oder Ausstanzen auf einfache und damit kostengünstige Weise hergestellt werden können. Vorteilhafterweise gilt gleiches auch für den zweiten Tragarm des ersten Tragwerkes.

Vorteilhafterweise liegen die Kräfteeinleitungspunkte der Hubzylindereinrichtung und/oder der Klappzylindereinrichtung in das Hub- und Klapptragwerk jeweils in den durch die Drehpunkte A₁, C₁, D, E₁ bzw. A₂, B, C₂, E₂ gebildeten Ebenen der Elemente des jeweiligen ersten und/oder zweiten Tragwerks, in der die Hubzylindereinrichtung des erstes Tragwerks und die Klappzylindereinrichtung des zweites Tragwerks in bezug auf die von Ihnen auf das Tragwerk bzw. in dem Tragwerk ausgeübten Kräfte einwirken.

Der Vorteil der erfindungsgemäß vorgeschlagenen Lösung besteht im wesentlichen darin, daß aufgrund der Anordnung der im wesentlichen parallelogrammförmigen Tragwerke, die beide zusammen das Hub- und Klapptragwerk bilden, und der Anordnung der Hubzylindereinrichtung sowie der Klappzylindereinrichtung jeweils in der Drehebene des jeweiligen Tragwerks, d.h. also nicht in Querrichtung versetzt zueinander, keine Drehmomente in Querrichtung auftreten können, so daß gewährleistet ist, daß sich keine Spalte in vertikaler und horizontaler Richtung zwischen der Ladebordwand bei horizontaler Ausrichtung relativ zur Ladeebene eines Fahrzeugs ausbilden können und auch nicht sich öffnende Spalte bei vertikaler Ausrichtung der Ladebordwand im den Laderaum eines Fahrzeugs verschließenden Zustand. Ein weiterer wesentlicher Vorteil des erfindungsgemäßen Ladebordwandsystems besteht auch darin, daß dieses einfach konstruktiv ausgestaltet sein kann und aufgrund der gewählten Konstruktion auch keine ungleichmäßige Belastung auf das Hub- und Klapptragwerk ausgeübt wird, so daß dieses über lange Zeiträume stabil bleibt und somit auch ein notwendiger Wartungsaufwand auf ein Minimum reduziert wird.

Schließlich ist es von sehr wesentlichem Vorteil, daß bei dem erfindungsgemäßen Ladebordwandsystem kein Achskörper vorgesehen zu werden braucht, der, wie die Praxis gezeigt hat, sich als für derartige Systeme äußerst nachteilig und hinderlich erwiesen hat.

Das erfindungsgemäße Ladebordwandsystem kann grundsätzlich auf beliebige geeignete Weise an einer Tragkonstruktion eines Fahrzeugs befestigt werden, an der normalerweise Ladebordwandsysteme dieser Art befestigt werden. Regelmäßig werden die Tragwerke eines Fahrzeugs durch zwei in Fahrzeuglängsrichtung angeordnete, parallel voneinander beabstandete U-profilförmige Träger gebildet, die auch die Antriebsachse bzw. Achsen des Fahrzeugs aufnehmen. Vielfach werden Ladebordwandsysteme dieser Art entweder direkt an derartigen Tragwerken durch Schraub- und/oder Schweißverbindungen befestigt oder aber mittels mehr oder weniger aufwendiger Befestigungskonstruktionen.

Um die Befestigung des Ladebordwandsystems sehr einfach und kostengünstig ausbilden zu können, so daß auch eine nachträgliche Montage der Ladebordwand am Tragwerk möglich ist, was gleichermaßen auch für eine Demontage wichtig ist, erfolgt vorteilhafterweise die Befestigung des ersten und des zweiten Tragwerks der Ladebordwand am Fahrzeug über jeweils ein gesondertes Befestigungselement, wobei das Befestigungselement selbst ein Teil des parallelogrammförmigen jeweiligen Tragwerks ist, so daß auch dafür keine gesonderten Tragwerkelemente vorgesehen werden müssen und über das Befestigungselement eine einfache und schnelle Befestigung am Tragwerk möglich ist.

Das Befestigungselement selbst kann an sich eine beliebige geeignete konstruktive Struktur aufweisen, es hat sich jedoch als vorteilhaft herausgestellt, dieses plattenförmig auszubilden, was wiederum eine einfache Herstellbarkeit, beispielsweise durch Stanzung oder Ausschneiden aus plattenförmigen Halbzeugen oder Werkstoffplatten, zur Folge hat.

Um die Biegesteifigkeit des Befestigungselements auf sehr einfache Weise zu erhöhen und das Einleiten von Kräften, die durch das Ladebordwandsystem und die darauf transportierte Last entstehen, in die Tragrahmen des Fahrzeugs und somit in das Fahrzeug stark zu vermindern, verläuft das Befestigungselement längs einer im an das Fahrzeug angebauten Zustand im wesentlichen vertikal verlaufenden Knick- oder Kantlinie mit einem ersten Teil in Richtung auf den Tragrahmen des Fahrzeugs zu und ist mit einem zweiten Teil, an dem das Tragwerk befestigt ist, im wesentlichen parallel zum Tragrahmen ausgerichtet, wobei zwischen beiden Teilen ein stumpfer Winkel α gebildet wird.

Vorzugsweise ist das Befestigungselement mit dem Tragarmen eines Fahrzeugs über ein gesondertes Verbindungselement fest verbindbar, das unmittelbar an den konstruktiven Aufbau der Tragrahmen des jeweiligen Fahrzeugs, an dem das erfindungsgemäße Ladebordwandsystem montiert werden soll, angepaßt werden kann. Dadurch ist es möglich, die gesamte übrige Konstruktion des Ladebordwandsystems einheitlich auszubilden, so daß gegebenenfalls nur diese Verbindungselemente an den unterschiedlichen Aufbau der Tragrahmen des Fahrzeugs, an dem das Ladebordwandsystem montiert werden soll, angepaßt zu werden brauchen.

Das Verbindungselement hat vorzugsweise eine plattenförmige Struktur und kann wiederum durch Stanzung auf einfache Weise aus plattenförmigen Halbzeugen oder plattenförmigen Werkstoffen schlechthin hergestellt werden.

Um bei einer einfachen Ausbildung des Verbindungselements ein Optimum an Festigkeit, insbesondere Biegefestigkeit, zu erreichen, weist das Verbindungselement wenigstens einen im wesentlichen quer zum Fahrzeug ausgerichteten ersten Schenkel auf, wobei das Befestigungselement im Bereich seiner Knick- oder Kantlinie wenigstens mit dem freien Ende des Schenkels verbunden ist. In dem Bereich der Knick- oder Kantlinie kann das Befestigungselement auf sehr einfache Weise mit dem Verbindungselement durch Schweißung verbunden werden, es ist aber auch möglich, in diesem Bereich ein Winkelprofil vorzusehen, das einerseits mit dem zweiten Teil des Befestigungselements verbindbar ist und andererseits mit dem ersten Schenkel des Verbindungselements, wobei ein derartiges Winkelprofil auch über Schweißung mit dem Verbindungselement und dem Befestigungselement verbunden werden kann, oder aber mittels Schraubverbindungen, wobei das Winkelprofil noch zur Verbesserung der Knickfestigkeit und Eigenstabilität des Verbunds aus Verbindungselement und Befestigungselement beiträgt.

Bei einer anderen vorteilhaften Konstruktion, bei der noch größere Kräfte durch das Ladebordwandsystem und die darauf zu transportierende Last in die Tragrahmen des Fahrzeugs eingeleitet werden müssen, d.h. bei einer Konstruktion, die insgesamt noch stabiler ausgebildet werden muß, ist es vorteilhaft, daß das Verbindungselement einen im wesentlichen quer zum Fahrzeug ausgerichteten zweiten Schenkel aufweist, wobei das Befestigungselement mit dem freien Ende seines ersten Teils, das abgewinkelt ausgebildet ist, mit dem zweiten Schenkel verbunden ist. Darüber hinaus eignet sich die voraufgeführte vorteilhafte Ausführungsform in Verbindung mit dem vorher ebenfalls schon beschriebenen gesonderten Winkelprofilelement zwischen Verbindungselement und Befestigungselement auch zur einfachen Überbrückung von unterschiedlich weit voneinander beabstandeten Tragrahmen des Fahrzeugs, indem nämlich das Winkelprofil einerseits an einem Schenkel des Verbindungselements und das abgewinkelte freie Ende des ersten Teils des Befestigungselements am zweiten Schenkel des Verbindungselements in unterschiedlichem Abstand zur Basis des Verbindungselements befestigt werden können, je nach Abstand der beiden jeweils angetroffenen Tragrahmen des Fahrzeugs voneinander.

Wie vorangehend schon erwähnt, kann das Befestigungselement mit dem Tragrahmen eines Fahrzeugs über die vorbeschriebene feste Verbindung mittels der Verbindungselemente befestigt werden, beispielsweise über Schraubverbindungen und/oder eine Schweißverbindung. Da aber Schraubverbindungen und Schweißverbindungen eine sehr genaue Justage und eine sehr genaue Fixierung der Befestigungspunkte vor dem eigentlichen Befestigungsvorgang erfordern und vielfach eine Ausführung von Befestigungsbohrungen im Tragrahmen des Fahrzeugs aus Festigkeitsgründen unerwünscht ist, was gleichermaßen für die Ausführung von Schweißverbindungen am Tragrahmen gilt, wird vorgeschlagen, das Ladebordwandsystem derart auszubilden, daß vorzugsweise die Befestigungselemente mit dem Tragrahmen eines Fahrzeugs über klauenartig ausgestaltete Klemmelemente, die über horizontale Stege des Tragrahmens des Fahrzeugs greifen, lösbar befestigbar sind. Auf diese Weise ist es möglich, daß unter Erreichen einer hohen Befestigungsstabilität und einer sehr hohen Sicherheit während des Betriebes des Ladebordwandsystems an einem Fahrzeug dennoch eine einfache Befestigbarkeit erreicht wird, die sowohl das Montieren als auch das Demontieren auf sehr einfache Weise erlaubt, wobei aber der Tragrahmen des Fahrzeugs weder angebohrt werden muß noch mit Schweißnähten beaufschlagt werden muß, so daß dieser auch bei montiertem erfindungsgemäßen Ladebordwandsystem seine ursprüngliche Stabilität ohne Einschränkungen behält.

Die Erfindung wird nun unter Bezugnahme auf die nachfolgenden schematischen Zeichnungen anhand eines Ausführungsbeispieles im einzelnen beschrieben. Darin zeigen:
- Fig. 1: in perspektivischer Darstellung ein Ladebordwandsystem gemäß der Erfindung, das über klauenartig ausgestaltete Klemmelemente an horizontalen Stegen des Tragrahmens eines Fahrzeugs befestigt ist, wobei die Ladebordwand sich im abgesenkten Zustand befindet,
- Fig. 2: in perspektivischer Darstellung im Ausschnitt ein erstes Befestigungselement, das über Schraubverbindungen am Tragrahmen des Fahrzeugs befestigbar ist,
- Fig. 3: in perspektivischer Darstellung im Ausschnitt ein zweites Befestigungselement, das über Schraubverbindungen am Tragrahmen des Fahrzeugs befestigbar ist, wobei die hier gezeigte Ausführungsform des Befestigungselements für größere Belastungen ausgelegt ist als die in Fig. 2 dargestellte,
- Fig. 4: in perspektivischer Darstellung im Ausschnitt eine Darstellung eines Teils des Ladebordwandsystems gemäß Fig. 1,
- Fig. 5: ein Schema der Elemente des ersten Tragwerks und des zweiten Tragwerks sowie der daran angreifenden Hubzylindereinrichtung und der ein Teil des zweiten Tragwerks bildenden Klappzylindereinrichtung und
- Fig. 6: in perspektivischer Darstellung das erste Tragwerk, gebildet aus zwei ersten Tragarmen sowie einem zweiten Tragarm, wobei der vordere erste Tragarm zum besseren Verständnis des konstruktiven Aufbaus des ersten Tragwerks teilweise im Ausschnitt dargestellt ist.

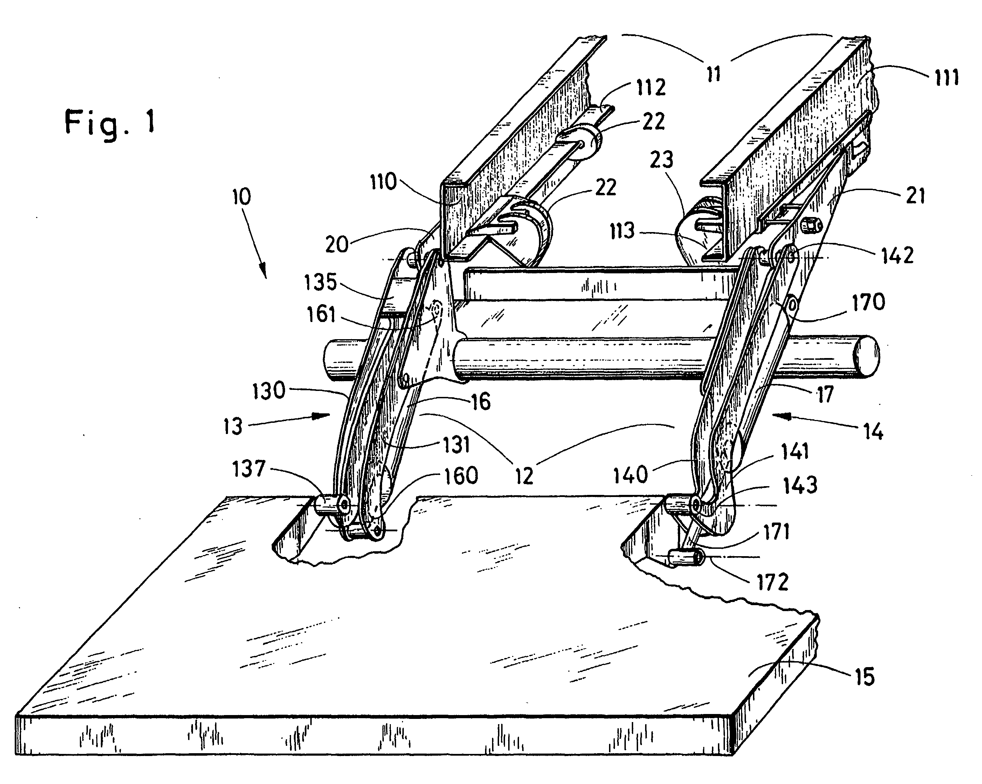

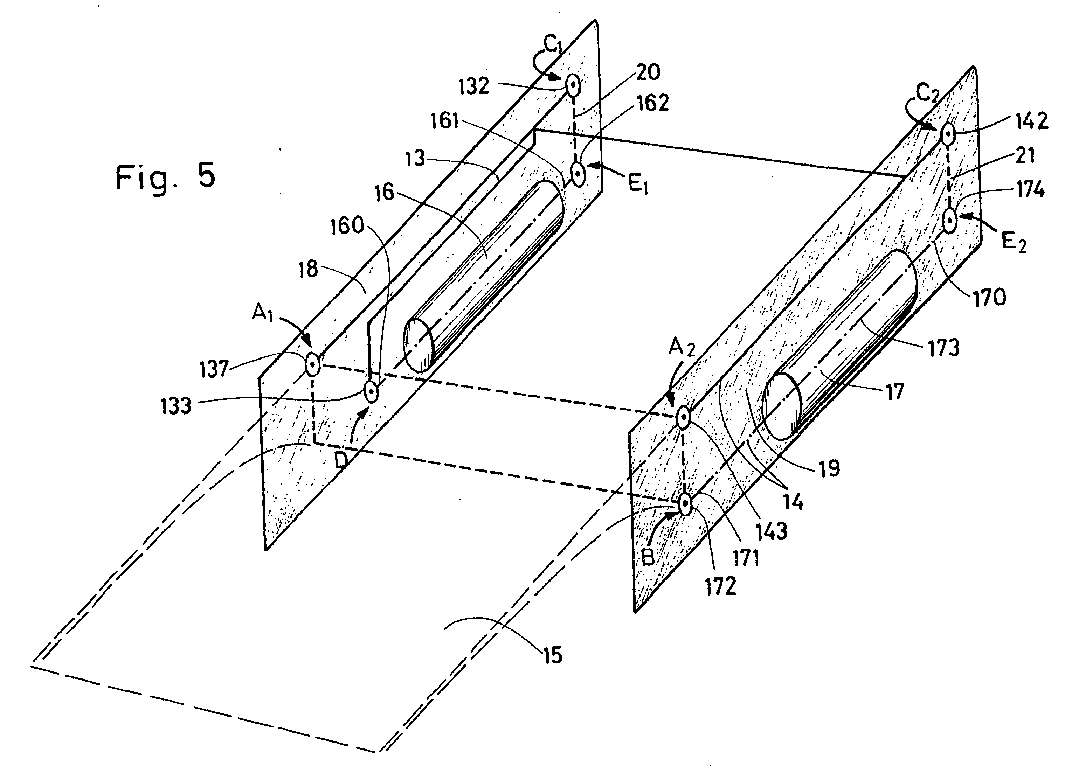

Es wird zunächst Bezug genommen auf das in Fig. 1 dargestellte Ladebordwandsystem 10, das anhand dieser Darstellung bezüglich seines grundsätzlichen Aufbaus beschrieben wird. Das Ladebordwandsystem 10 umfaßt im wesentlichen ein Hub- und Klapptragwerk 12, das wiederum aus einem ersten Tragwerk 13 und einem zweiten Tragwerk 14 besteht, die im wesentlichen parallel voneinander beabstandet an einem Fahrzeug 11 über Befestigungselemente 20, 21 befestigt werden, wobei auf die Befestigung im einzelnen noch weiter unten eingegangen wird. Das erste und das zweite Tragwerk 13, 14 bilden zusammen mit den Befestigungselementen 20, 21, das zweite Tragwerk 14 zusätzlich noch zusammen mit einer Klappzylindereinrichtung 17 eine parallelogrammförmige Struktur, wie sie insbesondere aus Fig. 5 ersichtlich ist, worauf aber im einzelnen ebenfalls noch weiter unten eingegangen wird. Mit dem ersten und zweiten Tragwerk 13, 14 ist eine im wesentlichen plattenförmige Ladebordwand 15 zum Heben und Absenken einer Last (ohne Last dargestellt) und zum Verschließen eines Stauraumes des Fahrzeugs 11 drehbar verbunden. Mit dem ersten Tragwerk 13 wirkt eine Hubzylindereinrichtung 16 zum Heben und Senken der Ladebordwand 15 zusammen. Die Klappzylindereinrichtung 17, die zum Verschwenken der Ladebordwand von der Horizontalen in die Vertikale und umgekehrt dient, wirkt mit dem zweiten Tragwerk 14 zusammen und ist Teil seiner parallelogrammförmigen Struktur.

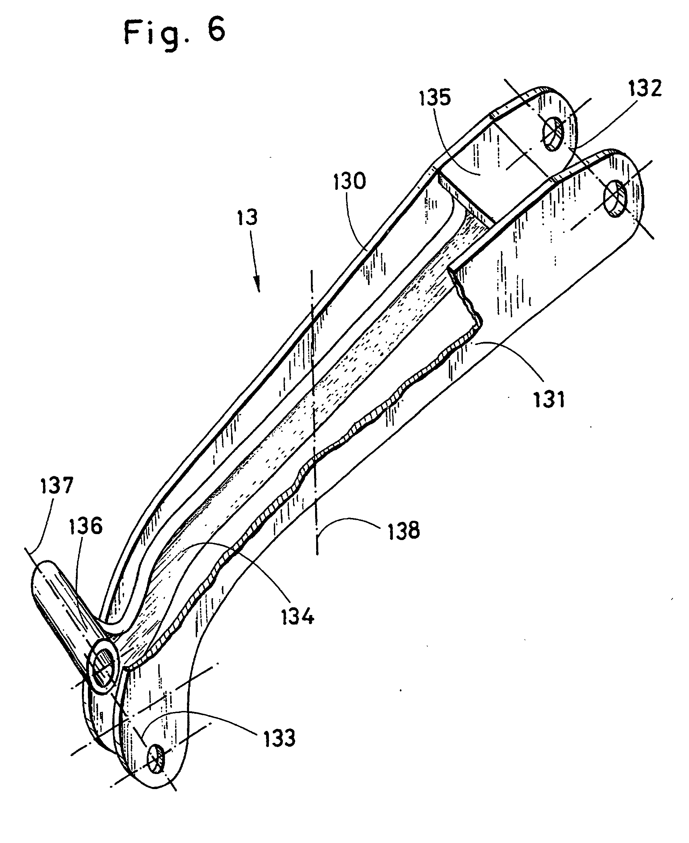

Das erste Tragwerk 13, in den Figuren 1 und 5 links dargestellt, umfaßt zwei im wesentlichen parallel voneinander beabstandete Tragwerke 130, 131, die über eine erste Drehachse 132 am Befestigungselement 20 drehbar befestigt sind. Die am entgegengesetzten Ende der ersten Tragarme 130, 131 ausgebildete zweite Drehachse 133 ist mit dem ersten Ende 160 der Hubzylindereinrichtung 16 befestigt, vergleiche auch Fig. 6. Das zweite Ende 161 der Hubzylindereinrichtung 16 ist ebenfalls drehbar am Befestigungselement 20 befestigt.

Im wesentlichen in der Mittelebene 138 zwischen den ersten Tragarmen 130, 131 ist ein zweiter Tragarm 134 vorgesehen, vergleiche auch Fig. 6. Der zweite Tragarm 134 ist mit seinem ersten Ende 135 mit den beiden ersten Tragarmen 130, 131 derart befestigt, daß eine traversenartige Überbrückung beider ersten Tragarme 130, 131 erreicht wird. Das zweite Ende 136 des zweiten Tragarmes 134 ist über eine im wesentlichen orthogonal zu den ersten beiden Tragarmen 130, 131 verlaufende Drehachse 137 drehbar mit der Ladebordwand 15 befestigt.

Das zweite Tragwerk 14, das ähnlich wie das erste Tragwerk 13 ausgebildet ist, weist wiederum zwei im wesentlichen parallel voneinander beabstandete erste Tragarme 140, 141 auf, die über eine erste Drehachse 142 am Befestigungselement 21 drehbar befestigt sind. Die am anderen Ende der ersten Tragarme 140, 141 vorgesehene zweite Drehachse 143 ist im wesentlichen orthogonal zu den ersten Tragarmen 140, 141 ausgebildet und verläuft im wesentlichen parallel zur ersten Drehachse 142. Über die Drehachse 143 sind die beiden ersten Tragarme 140, 141 drehbar mit der Ladebordwand 15 befestigt.

Gewissermaßen als ein Schenkel des parallelogrammförmig ausgebildeten zweiten Tragwerks ist die Klappzylindereinrichtung 17 vorgesehen, vergleiche auch Fig. 5, die an ihrem ersten Ende 170 um eine Drehachse 174 drehbar am Befestigungselement 21 befestigt ist. Mit ihrem zweiten Ende 171 ist die Klappzylindereinrichtung 17 um eine Drehachse 172, die im wesentlichen orthogonal zur Längsachse 173 der Klappzylindereinrichtung 17 ausgebildet ist, drehbar mit der Ladebordwand 15 befestigt. Die (gedachte) Längsachse 173 verläuft im wesentlichen in der die Schwenkebene bildenden Ebene 19 des zweiten Tragwerks 14, vergleiche die strickpunktierte Linie in Fig. 5.

Es wird nun Bezug genommen auf Fig. 5, in der das Hebelschema des parallelogrammförmigen Hub- und Klapptragwerks 12, d.h. des ersten Tragwerks 13 und des zweiten Tragwerks 14, in Verbindung mit der daran angreifenden Hubzylindereinrichtung 16 sowie der zum zweiten Tragwerk integral gehörenden Klappzylindereinrichtung 17 gezeigt ist. Die Kräfteeinleitungspunkte der Hubzylindereinrichtung 16 und der Klappzylindereinrichtung 17 in das Hub- und Klapptragwerk 12 liegen in der jeweiligen Ebene 18 der Drehpunkte A₁, C₁, D, E₁ der Drehachsen 137, 132, 133, 162 des ersten Tragwerks 13 bzw. in der Ebene 19 der Drehpunkt A₂, B, C₂, E₂ der Achsen 143, 172, 142, 174 des zweiten Tragwerks 14.

Bedingt durch den konstruktiven Aufbau, daß die Kräfteeinleitungspunkte der jeweiligen Tragwerke 13, 14 in der Ebene der Drehpunkte zum jeweiligen Tragwerk 13, 14 gehörenden Elemente liegen, kann bei auf der Ladebordwand 15 befindlicher Last das nachteilige Drehmoment nicht entstehen, so daß ein Spalt bzw. Spalt in vertikaler und horizontaler Richtung zwischen horizontal ausgerichteter Ladebordwand 15 und einer hier nicht dargestellten Ladeebene des Fahrzeugs 11 im angehobenen Zustand des Hub- und Klapptragwerks 12 nicht auftreten und auch dann nicht, wenn die Ladebordwand 15 aus der Horizontalen in die Vertikale durch Betätigung der Klappzylindereinrichtung 17 verschwenkt worden ist.

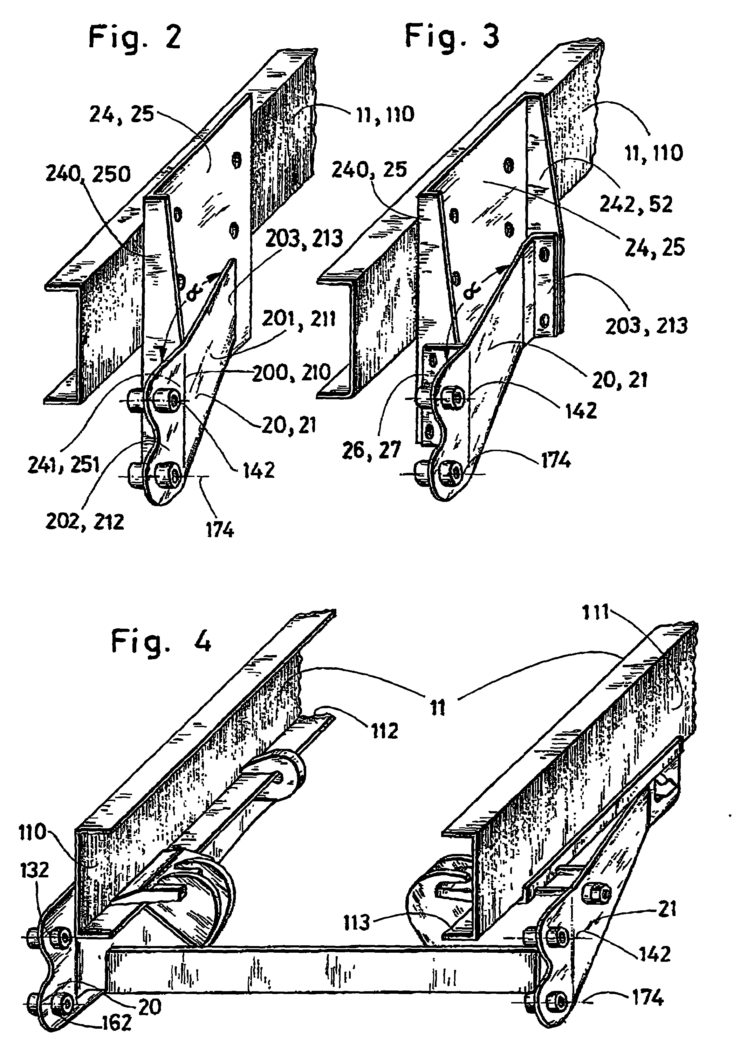

Teil der parallelogrammförmig strukturierten Tragwerke 13, 14 sind die jeweiligen Befestigungselemente 20, 21, vergleiche insbesondere die Figuren 2, 3 und 4 sowie Fig. 5. Diese hier das Tragwerk 13, 14 ebenfalls mitausbildenden Befestigungselemente 20, 21 können aus flachen blechförmigen Elementen ausgebildet sein, in denen Achsbuchsen für die Drehachsen 132, 162, 142, 174 auf einfache Weise aufgenommen werden können. Die Befestigung der Befestigungselemente 20, 21 am Tragrahmen 110, 111 kann, wie in den Figuren 2 und 3 dargestellt ist, über Schraubverbindungen erfolgen, wobei dann aber der Tragrahmen 110, 111 des Fahrzeugs 11 mit entsprechenden Durchgangsöffnungen zur Aufnahme der hier nicht dargestellten Schraubenmutterverbindungen durchbohrt werden muß.

Die beiden in den Figuren 2 und 3 dargestellten Befestigungsvarianten des Befestigungselements 20, 21 weisen im an das Fahrzeug 11 bzw. den Trahrahmen 110, 111 angebauten Zustand eine im wesentlichen vertikal, d.h. orthogonal zu den Tragrahmen 110, 111, verlaufende Knick- oder Kantlinie 200, 210 auf. Das so gebildete erste Teil 201, 211 des Befestigungselements 20, 21 verläuft somit in Richtung auf den Tragrahmen 110, 111 des Fahrzeugs 11 zu, wohingegen das zweite Teil 202, 212 des Befestigungselements 20, 21, an dem das Tragwerk 13, 14 befestigt ist, im wesentlichen parallel zum Tragrahmen 110, 111 ausgerichtet ist. Somit wird zwischen den beiden Teilen 201, 211; 202, 212 ein stumpfer Winkel α gebildet.

Bei der in Fig. 2 dargestellten Ausgestaltung des Befestigungsbereichs des Ladebordwandsystems an den Tragrahmen 110, 111 des Fahrzeugs 11 ist ein im Querschnitt L-profilförmig ausgebildetes Verbindungselement 24, 25 vorgesehen, wobei das Verbindungselement 24, 25 derart am Tragrahmen 110, 111 befestigt ist, daß der dort ausgebildete erste Schenkel 240, 250 quer vom Tragrahmen 110, 111 wegsteht. Das Befestigungselement 201, 211 ist im Bereich seiner Knick- oder Kantlinie 200, 210 mit dem freien Ende 241, 251 des Schenkels 240, 250 verbunden, beispielsweise mittels einer hier nicht gesondert dargestellten Schweißnaht oder einer Schraubverbindung, wobei auch das freie Ende 203, 213 des ersten Teils 201, 211 des Befestigungselements 20, 21 am plattenförmigen Basisteil des Verbindungselements 24, 25 durch Schweißung oder eine sonstige geeignete Verbindung befestigt ist.

Die in Fig. 3 dargestellte Ausgestaltung des unmittelbaren Befestigungsbereichs des Ladebordwandsystems 10 an den Tragrahmen 110, 111 des Fahrzeugs 11 ist ähnlich aufgebaut wie die in Fig. 2 dargestellte Ausgestaltung, das in Fig. 3 dargestellte Verbindungselement 24, 25 weist jedoch einen ebenfalls im wesentlichen quer zur Basis des Verbindungselements 24, 25 und somit im angebauten Zustand quer zu den Tragrahmen 110, 111 ausgerichteten zweiten Schenkel 242, 252 auf. Das Befestigungselement 20, 21 ist hier gegenüber der Ausgestaltung von Fig. 2 mit dem freien Ende 203, 213, seines ersten Teils 201, 211 abgewinkelt ausgebildet und über diesen abgewinkelten Schenkel mit dem zweiten Schenkel 242, 252 des Verbindungselements 24, 25 verbunden.

Ein Winkelprofil 26 zwischen dem zweiten Teil 202, 212 des Befestigungselementes 20, 21 und dem ersten Schenkel 240, 250 des Verbindungselements 24, 25 kann ebenfalls vorgesehen sein, wobei das Winkelprofil 26 beispielsweise fest mit dem Befestigungselement 20, 21 verschweißt oder verschraubt sein kann, wobei der freie Schenkel des Winkelprofils 26 sowie das abgewinkelte freie Ende 203, 213 des ersten Teils 201, 211 des Befestigungselements 20, 21 mit Durchgangslöchern versehen sein kann, die mit entsprechend angepaßten Durchgangslöchern der beiden Schenkel 240, 250; 242, 252 des Verbindungselements 24, 25 in Abhängigkeit des Abstandes der beiden Tragrahmen 110, 111 angepaßt und verschraubt und/oder gegebenenfalls verschweißt werden können, so daß über diese variable Gestaltungsmöglichkeit bei unterschiedlich weit voneinander beabstandeten Tragrahmen 110, 111 eine leichte Anpassung möglich ist und auch auf einfache Weise Herstellungstoleranzen ohne Schwierigkeiten überbrückt werden können.

Eine noch elegantere Lösung ist in den Figuren 1 und 4 dargestellt, bei der die Befestigungselemente 20, 21 mit dem Tragrahmen 110, 111 des Fahrzeugs 11 über klauenartig ausgestaltete Klemmelemente 22, 23 befestigt sind. Die klauenartig ausgestalteten Klemmelemente 22, 23 greifen über horizontale Stege 112, 113 der regelmäßig U-förmigen Tragrahmenträger des Fahrzeugs, die beide im wesentlichen den Tragrahmen bilden, und können mittels hier nicht gesondert dargestellter Schraubklemmenverbindungen lösbar befestigt werden.

Da das Anheben und Absenken der Ladebordwand 15 mittels des erfindungsgemäßen Ladebordwandsystems 10 auf an sich bekannte Weise ebenso wie das Verklappen der Ladebordwand aus einer vertikalen in eine horizontale Stellung auf an sich bekannte Weise erfolgt, dem Fachmann also bekannt ist, wird hier auf diesen Betätigungsvorgang sowie die Steuerung der Hubzylindereinrichtung 16 und der Klappzylindereinrichtung, die hydraulisch und/oder elektrisch betätigt werden können, nicht weiter eingegangen.

### Bezugszeichenliste

- 10: Ladebordwandsystem
- 11: Fahrzeug
- 110: Tragrahmen
- 111: Tragrahmen
- 12: Hub- und Klapptragwerk
- 112: horizontaler Steg
- 113: horizontaler Steg
- 13: erstes Tragwerk
- 130: erster Tragarm
- 131: erster Tragarm
- 132: erste Drehachse
- 133: zweite Drehachse
- 134: zweiter Tragarm
- 135: erstes Ende
- 136: zweites Ende
- 137: Drehachse
- 138: Mittelebene
- 14: zweites Tragwerk
- 140: erster Tragarm
- 141: erster Tragarm
- 142: erste Drehachse
- 143: zweite Drehachse
- 15: Ladebordwand
- 16: Hubzylindereinrichtung
- 160: erstes Ende
- 161: zweites Ende
- 162: Drehachse
- 17: Klappzylindereinrichtung
- 170: erstes Ende
- 171: zweites Ende
- 172: Drehachse
- 173: Längsachse
- 174: Drehachse
- 18: Ebene (erstes Tragwerk)
- 19: Ebene (zweites Tragwerk)
- 20: Befestigungselement
- 200: Knick- oder Kantlinie
- 201: erstes Teil
- 202: zweites Teil
- 203: freies Ende
- 21: Befestigungselement
- 210: Knick- oder Kantlinie
- 211: erstes Teil
- 212: zweites Teil
- 213: freies Ende
- 23: Klemmelement
- 24: Verbindungselement
- 240: erster Schenkel
- 241: freies Ende
- 242: zweiter Schenkel
- 25: Verbindungselement
- 250: erster Schenkel
- 251: freies Ende
- 252: zweiter Schenkel
- 26: Winkelprofil
- 27: Winkelprofil

## Patentansprüche

1. Ladebordwandsystem (10) zur Befestigung an Fahrzeugen (11), insbesondere Lastkraftfahrzeugen, umfassend jeweils ein im wesentlichen parallelogrammförmiges, aus zwei im wesentlichen parallel voneinander beabstandeten Tragwerken (13, 14) bestehendes Hub- und Klapptragwerk (12), eine im wesentlichen plattenförmige Ladebordwand (15) zum Heben und Absenken einer Last und zum Verschließen eines Stauraumes des Fahrzeuges (11) und eine Hubzylindereinrichtung (16) zum Heben und Senken der Ladebordwand (15) sowie eine Klappzylindereinrichtung (17) zum Verschwenken der Ladebordwand (15) von der Horizontalen in die Vertikale und umgekehrt, **dadurch gekennzeichnet, daß** das erste Tragwerk (13) einen ersten Tragarm (130; 131) und einen zweiten Tragarm (134) umfaßt, der an seinem ersten Ende (135) mit dem ersten Tragarm (130; 131) verbunden ist, wobei das zweite Ende (136) eine im wesentlichen orthogonal zum ersten Tragarm (130; 131) verlaufende Drehachse (137) aufweist, über die der zweite Tragarm (134) drehbar mit der Ladebordwand (15) befestigt ist.

2. Ladebordwandsystem nach Anspruch 1, **dadurch gekennzeichnet, daß** der erste Tragarm (130; 131) über eine erste Drehachse (132) am Fahrzeug (11) drehbar befestigt ist und über eine zweite, am gegenüberliegenden Ende des ersten Tragarms (130; 131) angeordnete Drehachse (133) mit einem ersten Ende (160) der Hubzylindereinrichtung (16) befestigt ist und wobei das zweite Ende (161) der Hubzylindereinrichtung (16) über eine Drehachse (162) drehbar am Fahrzeug (11) befestigt ist.

3. Ladebordwandsystem nach einem oder beiden der Ansprüche 1 oder 2, **dadurch gekennzeichnet, daß** der erste Tragarm (130; 131) zwei im wesentlichen parallel voneinander beabstandete Tragarme (130) und (131) umfaßt.

4. Ladebordwandsystem nach Anspruch 3, **dadurch gekennzeichnet, daß** der zweite Tragarm (134) im wesentlichen in der Mittelebene (138) zwischen den beiden ersten Tragarmen (130, 131) ausgebildet ist.

5. Ladebordwandsystem nach einem oder mehreren der Ansprüche 1 bis 4, **dadurch gekennzeichnet, daß** das zweite Tragwerk (14) zwei im wesentlichen parallel voneinander beabstandete erste Tragarme (140, 141) umfaßt, wobei die ersten Tragarme (140, 141) über eine erste Drehachse (142) am Fahrzeug (11) drehbar befestigt sind und über eine zweite, am anderen Ende der ersten Tragarme (140, 141) angeordnete Drehachse (143), die im wesentlichen orthogonal zu den ersten Tragarmen (140, 141) und parallel zur ersten Drehachse (142) verläuft, drehbar mit der Ladebordwand (15) befestigt sind.

6. Ladebordwandsystem nach einem oder mehreren der Ansprüche 1 bis 5, **dadurch gekennzeichnet, daß** die Klappzylindereinrichtung (17), die an ihrem ersten Ende (170) drehbar am Fahrzeug (11) befestigt ist, mit ihrem zweiten Ende (171) um eine Drehachse (172) im wesentlichen orthogonal zur Längsachse (173) der Klappzylindereinrichtung (17) drehbar mit der Ladebordwand (15) befestigt ist, wobei die Längsachse (173) im wesentlichen in der die Schwenkebene bildenden Ebene (19) des zweiten Tragwerks (14) verläuft.

7. Ladebordwandsystem nach einem oder mehreren der Ansprüche 5 oder 6, **dadurch gekennzeichnet, daß** die Tragarme (130, 131; 140, 141) im wesentlichen plattenförmig ausgebildet sind.

8. Ladebordwandsystem nach einem oder mehreren der Ansprüche 1 bis 7, **dadurch gekennzeichnet, daß** der zweite Tragarm (134) des ersten Tragwerks (13) im wesentlichen plattenförmig ausgebildet ist.

9. Ladebordwandsystem nach einem oder mehreren der Ansprüche 1 bis 8, **dadurch gekennzeichnet, daß** die Kräfteeinleitungspunkte der Hubzylindereinrichtung (16) und/oder der Klappzylindereinrichtung (17) in das Hubund Klapptragwerk (12) jeweils in den durch die Drehpunkte A₁, C₁, D, E₁ bzw. A₂, B, C₂, E₂ gebildeten Ebenen (18, 19) der Elemente des jeweiligen ersten und/oder zweiten Tragwerks (13, 14) liegen, in der die Hubzylindereinrichtung (16) des ersten Tragwerks (13) und die Klappzylindereinrichtung (17) des zweiten Tragwerks (14) in bezug auf die von ihnen auf das Tragwerk (13) bzw. in dem Tragwerk (14) ausgeübten Kräfte einwirken.

10. Ladebordwandsystem nach einem oder mehreren der Ansprüche 1 bis 9, **dadurch gekennzeichnet, daß** die Befestigung des ersten und des zweiten Tragwerks (13, 14) am Fahrzeug (11) über jeweils ein gesondertes Befestigungselement (20, 21) erfolgt.

11. Ladebordwandsystem nach Anspruch 10, **dadurch gekennzeichnet, daß** das Befestigungselement (20, 21) eine plattenförmige Struktur aufweist.

12. Ladebordwandsystem nach einem oder beiden der Ansprüche 10 oder 11, **dadurch gekennzeichnet, daß** das Befestigungselement (20, 21) längs einer im an das Fahrzeug (11) angebauten Zustand im wesentlichen vertikal verlaufenden Knick- oder Kantlinie (200, 210) mit einem ersten Teil (201, 211) in Richtung auf den Tragrahmen (110, 111) des Fahrzeugs (11) zu verläuft und mit einem zweiten Teil (202, 212), an dem das Tragwerk (13, 14) befestigt ist, im wesentlichen parallel zum Tragrahmen (110, 111) ausgerichtet ist, wobei zwischen beiden Teilen (201, 211; 202, 212) ein stumpfer Winkel α gebildet wird.

13. Ladebordwandsystem nach einem oder mehreren der Ansprüche 10 bis 12, **dadurch gekennzeichnet, daß** das Befestigungselement (20, 21) mit dem Tragrahmen (110, 111) eines Fahrzeugs (11) über ein Verbindungselement (24, 25) fest verbindbar befestigbar ist.

14. Ladebordwandsystem nach Anspruch 13, **dadurch gekennzeichnet, daß** das Verbindungselement (24, 25) eine plattenförmige Struktur aufweist.

15. Ladebordwandsystem nach Anspruch 14, **dadurch gekennzeichnet, daß** das Verbindungselement (24, 25) wenigstens einen im wesentlichen quer zum Fahrzeug (11) ausgerichteten ersten Schenkel (240, 250) aufweist, wobei das Befestigungselement (20, 21) im Bereich seiner Knick- oder Kantlinie (200, 210) wenigstens mit dem freien Ende (241, 251) des Schenkels (240, 250) verbunden ist.

16. Ladebordwandsystem nach Anspruch 15, **dadurch gekennzeichnet, daß** das Verbindungselement (24, 25) einen im wesentlichen quer zum Fahrzeug (11) ausgerichteten zweiten Schenkel (242, 252) aufweist, wobei das Befestigungselement (20, 21) mit dem freien Ende (203, 213) seines ersten Teils (201, 211), das abgewinkelt ausgebildet ist, mit dem zweiten Schenkel (242, 252) verbunden ist.

17. Ladebordwandsystem nach einem oder mehreren der Ansprüche 10 bis 12, **dadurch gekennzeichnet, daß** die Befestigungselemente (20, 21) mit dem Tragrahmen (110, 111) eines Fahrzeugs (11) über klauenartig ausgestaltete Klemmelemente (22, 23), die über horizontale Stege (112, 113) des Tragrahmens (110, 111) des Fahrzeugs (11) greifen, lösbar befestigbar sind.

## Claims

1. Tail-gate lift system (10) for attachment to vehicles (11), in particular heavy goods vehicles, comprising in each case an essentially parallelogram-shaped lifting and folding load-bearing structure (12) consisting of two essentially parallel load-bearing structures (13, 14) spaced a distance apart, an essentially platform-shaped tail-gate lift (15) for raising and lowering a load and to close a stowage space of the vehicle (11) and a lifting cylinder device (16) to raise and lower the tail-gate lift (15) together with a folding cylinder device (17) to pivot the tail-gate lift (15) from the horizontal to the vertical and vice versa, **characterized in that** the first load-bearing structure (13) comprises a first load-bearing arm (130; 131) and a second load-bearing arm (134) whose first end (135) is attached to the first load-bearing arm (130; 131), whereby the second end (136) has an axis of rotation (137) running essentially at right angles to the first load-bearing arm (130; 131) and via which the second load-bearing arm (134) is rotatably attached to the tail-gate lift (15).

2. Tail-gate lift system according to Claim 1, **characterized in that** the first load-bearing arm (130; 131) is rotatably attached via a first axis of rotation (132) on the vehicle (11) and is attached to a first end (160) of the lifting cylinder device (16) via a second axis of rotation (133) arranged at the opposite end of the first load-bearing arm (130; 131), and whereby the second end (161) of the lifting cylinder device (16) is rotatably attached on the vehicle (11) via an axis of rotation (162).

3. Tail-gate lift system according to one or both of the Claims 1 or 2, **characterized in that** the first load-bearing arm (130; 131) comprises two essentially parallel load-bearing arms (130) and (131) spaced a distance apart

4. Tail-gate lift system according to Claim 3, **characterized in that** the second load-bearing arm (134) is constructed essentially in the central plane (138) between the two first load-bearing arms (130; 131).

5. Tail-gate lift system according to one or more of the Claims 1 to 4, **characterized in that** the second load-bearing structure (14) comprises two essentially parallel first load-bearing arms (140, 141) spaced a distance apart, whereby the first load-bearing arms (140, 141) are rotatably attached via a first axis of rotation (142) on the vehicle (11) and are rotatably attached to the tail-gate lift (15) via a second axis of rotation (143) arranged at the other end of the first load-bearing arms (140, 141) that runs essentially at right angles to the first load-bearing arms (140, 141) and parallel to the first axis of rotation (142).

6. Tail-gate lift system according to one or more of the Claims 1 to 5, **characterized in that** the folding cylinder device (17), which is rotatably attached at its first end (170) onto the vehicle (11), is rotatably attached by its second end (171) to the tail-gate lift (15) so as to be rotatable around an axis of rotation (172) essentially at right angles to the longitudinal axis (173) of the folding cylinder device (17), whereby the longitudinal axis (173) runs essentially in the plane (19) of the second load-bearing structure (14) forming the pivot plane.

7. Tail-gate lift system according to one or more of the Claims 5 or 6, **characterized in that** the load-bearing arms (130, 131; 140, 141) are constructed essentially in the form of plates.

8. Tail-gate lift system according to one or more of the Claims 1 to 7, **characterized in that** the second load-bearing arm (134) of the first load-bearing structure (13) is constructed essentially in the form of a plate.

9. Tail-gate lift system according to one or more of the Claims 1 to 8, **characterized in that** the force introduction points of the lifting cylinder device (16) and/or of the folding cylinder device (17) into the lifting and folding load-bearing structure (12) lie in each case in the planes (18, 19) of the elements of the respective first and/or second load-bearing structure (13, 14) formed by the pivot points A₁, C₁, D, E₁ and A₂, B, C₂, E₂ respectively, and into which the lifting cylinder device (16) of the first load-bearing structure (13) and the folding cylinder device (17) of the second load-bearing structure (14) act with regard to the forces exerted by them on the load-bearing structure (13) and into the load-bearing structure (14) respectively.

10. Tail-gate lift system according to one or more of the Claims 1 to 9, **characterized in that** the attachment of the first and of the second load-bearing structure (13, 14) on the vehicle (11) takes place via a separate fixing element (20, 21) in each case.

11. Tail-gate lift system according to Claim 10, **characterized in that** the fixing element (20, 21) has a plate-shaped structure.

12. Tail-gate lift system according to one or both of the Claims 10 or 11, **characterized in that** the fixing element (20, 21) runs along the length of a knuckle or angle line (200, 210) that runs essentially vertically in the state in which it is installed onto the vehicle (11) with a first part (201, 211) in the direction towards the load-bearing frame (110, 111) of the vehicle (11) and is aligned with a second part (202, 212), to which the load-bearing structure (13, 14) is attached, essentially parallel to the load-bearing frame (110, 111), whereby an obtuse angle α is formed between the two parts (201,211; 202,212).

13. Tail-gate lift system according to one or more of the Claims 10 to 12, **characterized in that** the fixing element (20, 21) is capable of being attached in a fixed connection with the load-bearing frame (110,111) of a vehicle (11) via a connecting element (24, 25).

14. Tail-gate lift system according to Claim 13, **characterized in that** the connecting element (24, 25) has a plate-shaped structure.

15. Tail-gate lift system according to Claim 14, **characterized in that** the connecting element (24, 25) has at least one first side-member (240, 250) aligned essentially at right angles to the vehicle (11), whereby the fixing element (20, 21) is attached in the region of its knuckle or angle line (200, 210) at least to the free end (241, 251) of the side-member (240,250).

16. Tail-gate lift system according to Claim 15, **characterized in that** the connecting element (24, 25) has a second side-member (242, 252) aligned essentially at right angles to the vehicle (11), whereby the fixing element (20, 21) is attached by the free end (203, 213) of its first part (201, 211), which has an angled shape, to the second side-member (242, 252).

17. Tail-gate lift system according to one or more of the Claims 10 to 12, **characterized in that** the fixing elements (20,21) are detachably attachable to the load-bearing frame (110, 111) of a vehicle (11) via claw-shaped clamping elements (22, 23) that grip via horizontal ribs (112, 113) of the load-bearing frame (110, 111) of the vehicle (11).

## Revendications

1. Système de hayon élévateur (10) à fixer contre des véhicules (11), en particulier des camions, comprenant un cadre de levage et de pivotement (12) sensiblement en forme de parallélogramme, formé par deux consoles de support (13, 14) écartées l'une de l'autre et sensiblement parallèles, un hayon élévateur (15) sensiblement en forme de plateau, destiné à monter et abaisser une charge et à fermer un compartiment de chargement du véhicule (11), et un dispositif à vérin de levage (16) destiné à monter et abaisser le hayon élévateur (15), ainsi qu'un dispositif à vérin de pivotement (17), destiné à faire pivoter le hayon élévateur (15) d'un plan horizontal vers un plan vertical et inversement, **caractérisé en ce que** la première console de support (13) est formée par un premier bras de support (130 ; 131) et un deuxième bras de support (134), dont la première extrémité (135) est assemblée au premier bras de support (130 ; 131), la deuxième extrémité (136) étant munie d'un axe de rotation (137) qui est sensiblement perpendiculaire au premier bras de support (130 ; 131) et par l'intermédiaire duquel le deuxième bras de support (134) est fixé de manière rotative avec le hayon élévateur (15).

2. Système de hayon élévateur selon la revendication 1, **caractérisé en ce que** le premier bras de support (130 ; 131) est fixé de manière rotative contre le véhicule (11) par l'intermédiaire d'un premier axe de rotation (132) et est fixé à une première extrémité (160) du dispositif à vérin de levage (16) par l'intermédiaire d'un deuxième axe de rotation (133), agencé sur l'extrémité opposée du premier bras de support (130 ; 131), et la deuxième extrémité (161) du dispositif à vérin de levage (16) étant fixée de manière rotative contre le véhicule (11) par l'intermédiaire d'un axe de rotation (162).

3. Système de hayon élévateur selon une ou les deux revendications 1 ou 2, **caractérisé en ce que** le premier bras de support (130 ; 131) est formé par deux bras de support (130) et (131) écartés l'un de l'autre et sensiblement parallèles.

4. Système de hayon élévateur selon la revendication 3, **caractérisé en ce que** le deuxième bras de support (134) est réalisé sensiblement dans le plan médian (138) entre les deux premiers bras de support (130, 131).

5. Système de hayon élévateur selon l'une ou plusieurs des revendications 1 à 4, **caractérisé en ce que** la deuxième console de support (14) comprend deux premiers bras de support (140, 141) écartés l'un de l'autre et sensiblement parallèles, les premiers bras de support (140, 141) étant fixés de manière rotative contre le véhicule (11) par l'intermédiaire d'un premier axe de rotation (142) et étant fixés de manière rotative contre le hayon élévateur (15) par l'intermédiaire d'un deuxième axe de rotation (143), disposé sur l'autre extrémité des premiers bras de support (140, 141), lequel est sensiblement perpendiculaire aux premiers bras de support (140, 141) et parallèle au premier axe de rotation (142).

6. Système de hayon élévateur selon l'une ou plusieurs des revendications 1 à 5, **caractérisé en ce que** le dispositif à vérin de pivotement (17), qui est fixé par sa première extrémité (170) contre le véhicule (11) de manière à pouvoir pivoter, est fixé avec sa deuxième extrémité (171) contre le hayon élévateur (15) de manière à pouvoir pivoter autour d'un axe de rotation (172) sensiblement perpendiculaire à l'axe longitudinal (173) du dispositif à vérin de pivotement (17), l'axe longitudinal (173) étant sensiblement situé dans le plan (19) formant le plan de pivotement de la deuxième console de support (14).

7. Système de hayon élévateur selon une ou plusieurs des revendications 5 ou 6, **caractérisé en ce que** les bras de support (130, 131 ; 140, 141) sont réalisés dans une forme sensiblement plane.

8. Système de hayon élévateur selon l'une ou plusieurs des revendications 1 à 7, **caractérisé en ce que** le deuxième bras de support (134) de la première console de support (13) est réalisé dans une forme sensiblement plane.

9. Système de hayon élévateur selon l'une ou plusieurs des revendications 1 à 8, **caractérisé en ce que** les points d'introduction des forces du dispositif à vérin de levage (16) et/ou du dispositif à vérin de pivotement (17) dans le cadre de levage et de pivotement (12) sont situés dans les plans (18, 19) formés chacun respectivement par les points de rotation A₁, C₁, D, E₁ et A₂, B, C₂, E₂ des éléments de chaque première et/ou deuxième console de support (13, 14), dans lesquels le dispositif à vérin de levage (16) de la première console de support (13) et le dispositif à vérin de pivotement (17) de la deuxième console de support (14) agissent par rapport aux forces qu'ils exercent sur la console de support (13) et dans la console de support (14).

10. Système de hayon élévateur selon l'une ou plusieurs des revendications 1 à 9, **caractérisé en ce que** la première et la deuxième console de support (13, 14) sont fixées contre le véhicule (11) chacune par l'intermédiaire d'un élément de fixation (20, 21) séparé.

11. Système de hayon élévateur selon la revendication 10, **caractérisé en ce que** l'élément de fixation (20, 21) est formé par une structure plane.

12. Système de hayon élévateur selon une ou les deux revendications 10 ou 11, **caractérisé en ce que** l'élément de fixation (20, 21) s'étend le long d'une ligne d'inflexion ou ligne en arête (200, 210), sensiblement verticale dans la position montée contre le véhicule (11), ladite ligne étant formée par une première partie (201, 211) qui s'étend en direction du cadre de support (110, 111) du véhicule (11) et par une deuxième partie (202, 212), contre laquelle est fixée la console de support (13, 14) et qui est sensiblement parallèle au cadre de support (110, 111), un angle obtus α étant formé entre les deux parties (201, 211; 202, 212).

13. Système de hayon élévateur selon l'une ou plusieurs des revendications 10 à 12, **caractérisé en ce que** l'élément de fixation (20, 21) peut être fixé de manière inamovible contre le cadre de support (110, 111) d'un véhicule (11) par l'intermédiaire d'un élément d'assemblage (24, 25).

14. Système de hayon élévateur selon la revendication 13, **caractérisé en ce que** l'élément d'assemblage (24, 25) est formé par une structure plane.

15. Système de hayon élévateur selon la revendication 14, **caractérisé en ce que** l'élément d'assemblage (24, 25) comporte au moins une première branche (240, 250) orientée sensiblement dans le sens transversal au véhicule (11), l'élément de fixation (20, 21) étant assemblé, dans la zone de sa ligne d'inflexion ou ligne en arête (200, 210), au moins avec l'extrémité libre (241, 251) de la branche (240, 250).

16. Système de hayon élévateur selon la revendication 15, **caractérisé en ce que** l'élément d'assemblage (24, 25) comporte au moins une deuxième branche (242, 252) orientée sensiblement dans le sens transversal au véhicule (11), l'élément de fixation (20, 21) étant assemblé par l'extrémité libre (203, 213) de sa première partie (201, 211), qui forme un coude, avec la deuxième branche (242, 252).

17. Système de hayon élévateur selon l'une ou plusieurs des revendications 10 à 12, **caractérisé en ce que** les éléments de fixation (20, 21) peuvent être fixés de manière amovible avec les cadres de support (110, 111) d'un véhicule (11) par l'intermédiaire d'éléments de serrage (22, 23) conçus sous forme de pinces, qui entrent en prise avec des traverses horizontales (112, 113) du cadre de support (110, 111) du véhicule (11).
